# EUROPEAN PATENT SPECIFICATION

(11) **EP 2 170 688 B1**
(45) Date of publication and mention of the grant of the patent: **12.10.2011**
(21) Application number: 08789519.9
(22) Date of filing: 01.08.2008
(51) Int. Cl.: B62J 1/00

(54) **ELASTIC HUMAN BODY SUPPORT AND METHOD OF MAKING SAME**
ELASTISCHE STÜTZE FÜR DEN MENSCHLICHEN KÖRPER UND VERFAHREN ZU IHRER HERSTELLUNG
SUPPORT DE CORPS HUMAIN ELASTIQUE ET SON PROCEDE DE REALISATION

(30) Priority: 01.08.2007 IT VI20070210
(43) Date of publication of application: 07.04.2010
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2008/053092
(87) International publication number: WO 2009/016609

(56) References cited:
- WO-A-2007/020571
- US-A- 3 131 969
- US-A1- 2004 004 375
- US-B1- 6 957 857

## Description

### Field of the invention

The present invention generally finds application in the field of sport and leisure accessories, and particularly relates to a method of making elastic human body supports, such as bicycle saddles, chairs, armrests, backrests and seating surfaces of vehicle seats and the like.

The invention further relates to an elastic human body support of the above type, that can be made using a method according to the invention.

### Background of the invention

The elastic supports of the above type are known to be formed of a substantially rigid or semirigid frame that is designed to be attached to a stationary or movable structure, such as a bicycle frame, and a flexible upper cover that is designed to be in contact with the user.

One or more layers of resilient material, such as foam or gel, can be interposed between the frame and the cover, for improved seating comfort.

One known method of making such a support includes a step of providing a mold having a negative forming cavity conformed to the final shape of the support and a later step of introducing a first element made of a natural, synthetic or even composite material, which is designed to form the upper cover, in said cavity.

The next step consists in introducing the filling material, and is followed by a step of introducing a second element designed to form the frame, which may be made of a thermoplastic material to be cured once the mold is closed or a preformed rigid or semirigid element.

A critical aspect of prior art solutions is the coupling arrangement between the cover and the frame, particularly when the two elements are made of materials of various natures.

Proper coupling is in fact required to ensure optimal protection of the internal filling material from the ingress of water or to prevent any release of such material due to stresses occurring during use, as well as prevent any separation of the cover from the frame because of such stresses.

Typically, coupling between the two elements is accomplished by stitching or chemical and/or thermal bonding of the outer edge of the cover onto the peripheral edge of the frame, generally at the bottom face of the latter.

Nonetheless, this common solution still suffers from a few recognized drawbacks, mainly consisting in that, once the support is removed from the mold, an additional step is required for finishing the edge of the cover to remove excess parts and filling material burrs, which increases manufacturing times and costs.

In an attempt to obviate such drawbacks, various methods have been proposed for making elastic human body supports, such as bicycle saddles or the like, in which the cover is joined to the frame to form a resistant and comfortable assembly.

WO2007020571, which discloses all the features of the preamble of the method claim 1, in the name of same Applicant, discloses a method of making integral elastic supports including a step in which a peripheral bead is formed, which is designed to contact both the frame and the cover.

This latter may be arranged to entirely or partially cover the peripheral edge of the frame and will have the purpose of protecting the filling material from any possible seepage.

The upper cover is attached to the filling material by chemical and/or mechanical bonds and is also partially attached to the bead by its outer edge, thus preventing it from ensuring the required stability.

A method is also known for making a human body support in which the load bearing frame and the upper cover are coupled together by an additional interposed layer of polymeric material similar to the material of the upper cover and to the lower support.

Once again, the stresses that are normally transferred to the support during use can lead with time to partial removal of the cover at its edge, thereby affecting the quality and aesthetic appearance of the support.

The document US 6957857 discloses all the features of the preamble of the product claim 11.

### Summary of the invention

The object of the present invention is to overcome the above drawbacks, by providing a method of making elastic human body supports that is highly efficient and relatively cost-effective.

A particular object is to provide a method of making elastic supports composed of a frame and a cover in which the latter is firmly attached to the former.

A further object is to provide a method that provides an elastic support having high structural reliability.

Another object is to provide a method that minimizes finishing requirements on the whole support, thereby increasing the overall process throughput and providing considerable material savings.

Yet another object is to provide a method of making elastic supports in which the support is protected from any ingress of water or other particles.

Another important object of the present invention is to provide an elastic human body support that remains substantially intact even upon extensive use.

These and other objects, as better explained hereafter, are fulfilled by a method of making elastic human body supports as defined in claim 1, which includes the steps of: providing a frame having a top face, a bottom face and an outer peripheral edge along its entire outer profile, providing a cover having a top side designed to be in contact with a user and a bottom side oriented towards the top face of said frame, coupling said cover to said frame so that its bottom side faces towards the top face of said frame and at least partially covers said outer peripheral edge to define a semifinished assembly, providing an openable mold having at least one inner cavity whose shape substantially conforms to said semifinished assembly, and at least one peripheral cavity, opening said mold and introducing said semifinished assembly into said at least one inner cavity so that said outer edge of said frame at least partly covered by said cover is held in said annular peripheral cavity, introducing and curing at least one filling material in said peripheral cavity to form an outer peripheral rim.

According to the invention, the peripheral cavity is substantially U shaped so that the outer peripheral rim at least partially encloses both the top face and the bottom face of the frame with the cover at least partially interposed therebetween.

Thanks to this particular feature of the invention, the cover of the elastic support will be firmly attached to its frame in a stable and long-lasting manner.

Thus, the attachment will no longer exclusively rely on chemical and/or mechanical bonds between the edge portion of the cover and the frame, such as stitching, gluing, heat sealing or the like, which are susceptible to degradation and decrease of efficiency upon use.

Advantageously, the filling material may be selected from the group comprising thermoplastic and thermosetting resins in fluid, semifluid or semisolid form, and the step of forming the outer peripheral rim may include a step of injecting or pressing the resin into the annular peripheral cavity and a later step of hardening it, such as by curing.

Thus, the outer peripheral rim will be substantially integral with the semifinished assembly composed of the cover and the frame, thereby preventing any separation thereof upon extensive use of the support and protecting the support from any infiltration of water or particles.

Also, the cover may include an edge portion at least partially extending over the bottom face of the frame and the filling material may be introduced into the annular peripheral cavity to entirely cover the edge portion of the cover.

Thanks to this additional feature, once the outer peripheral rim is formed, no finishing will be required on the cover, e.g. to remove excess parts, and the support will be complete, thereby affording considerable time and cost savings.

In another aspect, the present invention relates to an elastic human body support as defined in claim 11.

### Brief description of the drawings

Further features and advantages of the invention will be more apparent from the detailed description of a preferred, non-exclusive embodiment of an elastic human body support and a method of making same according to the invention, which are described as a non-limiting example with the help of the annexed drawings, in which:
FIG. 1 shows a flowchart of a method of making an elastic human body support according to the invention;
FIG. 2 is a perspective view of a frame for making a support according to the invention;
FIG. 3 is a perspective view of an elastic support according to the invention in a first preferred embodiment;
FIG. 4 is a top view of the elastic support of FIG. 3;
FIG. 5 is a sectional front view as taken along the plane I-I of the elastic support of FIG. 4;

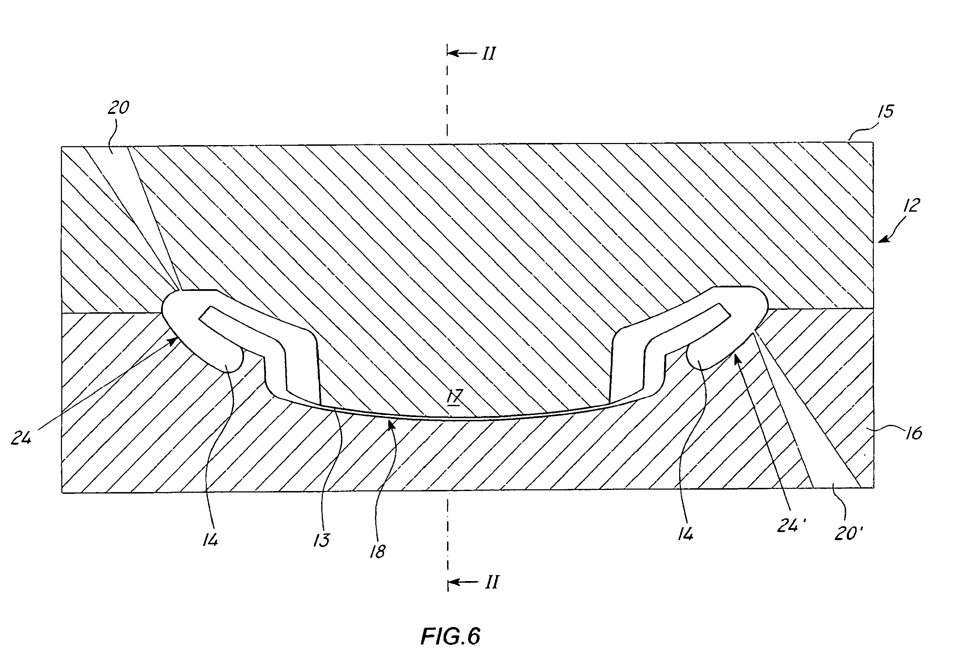

FIG. 6 is a first sectional front view of a mold for carrying out the method according to the invention;
FIG. 7 is a sectional front view of the elastic support in the first preferred embodiment, inserted into the mold of FIG. 6;
FIG. 8 is a sectional front view of the elastic support in a second preferred embodiment, inserted into a mold of the invention;

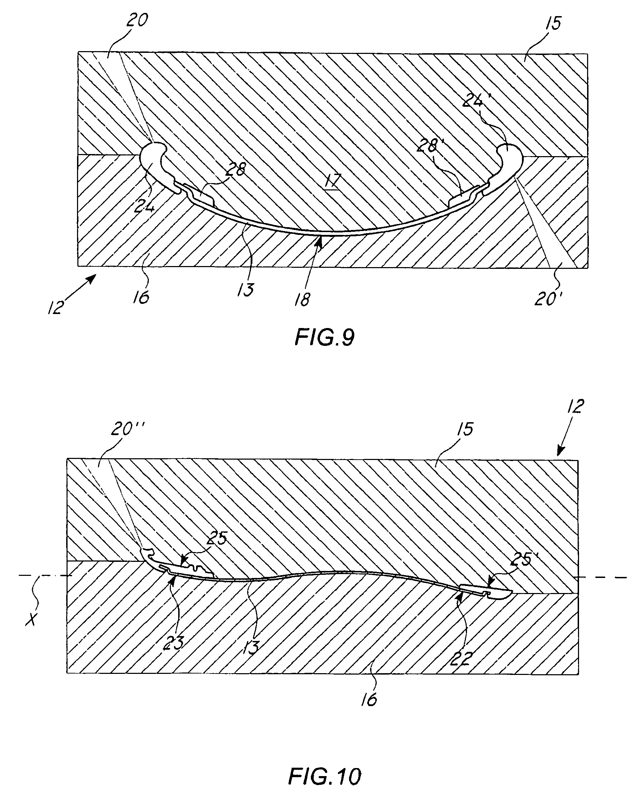

FIG. 9 is a second sectional front view of the mold of FIG. 6;
FIG. 10 is a sectional side view of the mold of FIG. 6 as taken along a plane II-II.

### Detailed description of a preferred embodiment

Referring to the annexed figures, an elastic human body support of the invention, generally designated by numeral 1, may be configured as a saddle of a cycle, motor cycle or the like, such as a bicycle.

Nonetheless, it shall be understood that the support 1 may be also configured as a surface of a chair, a seat or even as a backrest or armrest for a vehicle seat or any other human body support designed to be attached to a stationary or movable load bearing structure, not shown.

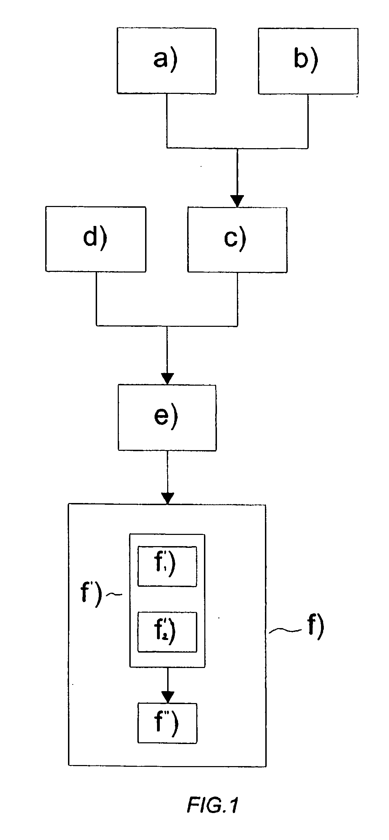

A method of making an elastic support of the above type is schematically shown in the flowchart of FIG. 1.

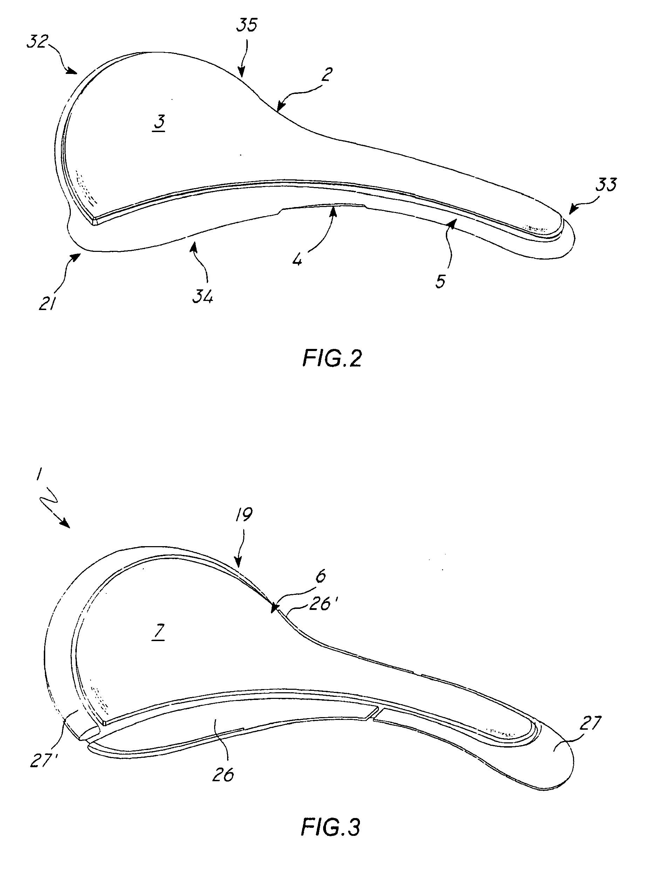

According to the invention, the method includes a step a) in which a frame 2 is provided, as shown in FIG. 2, which has a top face 3, a bottom face 4 and an outer peripheral edge 5 all along its outer profile, and a step b) in which a cover 6 is provided, having a top side 7 designed to be in contact with a user and a bottom side 8 oriented towards the top face 3 of the frame 2.

In a further step c), the cover 6 is coupled to the frame 2 so that its bottom side 8 faces towards the top face 3 of the latter and at least partially covers the outer peripheral edge 5 thereby defining a semifinished assembly.

Such coupling c) may be exemplary obtained by chemical and/or thermal bonding or even by stitching or any other chemical, physical and/or mechanical bond of an edge portion 10 of the cover 6 to the outer edge 5 of the frame 2 or to an edge portion 11 of its inner face 4.

The method further includes a step d) in which an openable mold 12 is provided, as shown in the sectional views of FIGS, 6 to 10, which has substantially at its center one or more inner cavities 13 whose shape substantially conforms to the semifinished assembly 9 and at least one peripheral cavity 14 communicating with the inner cavity 13.

The mold 12 may be composed of a male element 15 and a female element 16 respectively having a projection 17 that defines a pressing part and a specially shaped bottom wall 18, which defines in combination with the pressing part 17, with the mold 12 closed, the inner 13 and peripheral 14 cavities.

In the next step e), the mold 12 is opened to allow insertion of the semifinished assembly 9 in the inner cavity 13 so that the outer edge 5 of the frame 2 at least partially covered by the cover 6 is held in the peripheral cavity 14.

As the mold 12 is closed, a step f) is carried out for forming an outer peripheral edge 19 by introducing f') and curing f") at least one filling material in the peripheral cavity 14.

According to a peculiar feature of the invention, the peripheral cavity 14 is substantially U shaped so that the outer peripheral rim 19 at least partially encloses both the top face 3 and the bottom face 4 of the frame 2 with the cover 6 at least partially interposed therebetween.

Thus, the cover 6 will be firmly attached to the frame 2 due to the presence of the outer peripheral rim 19 which will prevent separation thereof even upon extensive use of the support 1.

In accordance with a first embodiment of the method, the filling material may be a thermoplastic or thermosetting resin, in fluid, semifluid or semisolid form, and the step f) in which the outer peripheral rim 19 is formed may include a step f) in which the resin is introduced by injection into the annular peripheral cavity 14 and a later step f'') in which the resin is cured, in a per se known manner.

The filling material may be injected f) through one or more passages 20, 20', 20" formed in one or both male 15 and/or female 16 elements of the mold 12, which communicate with the peripheral cavity 14.

In another embodiment of the inventive method, the forming step f) may include a step f) in which the polymeric material is introduced and pressed into the peripheral cavity 14, followed by the step f") in which such material is hardened and cured.

In this case, the step f) of introduction of the filling material may be carried out when the mold 12 is still open.

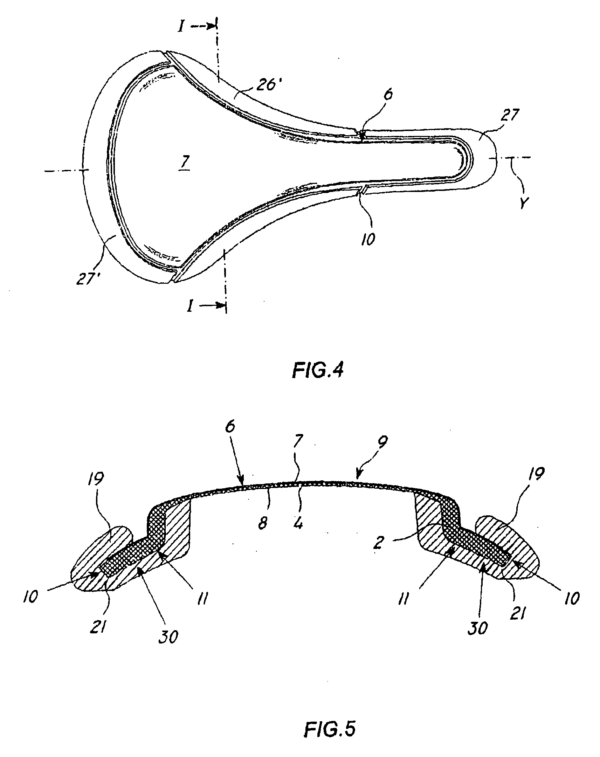

Furthermore, the cover 6 may have an edge portion 10 which does not extend beyond the outer edge 5 and the bottom edge 21 of the frame 2, as shown in FIG. 5.

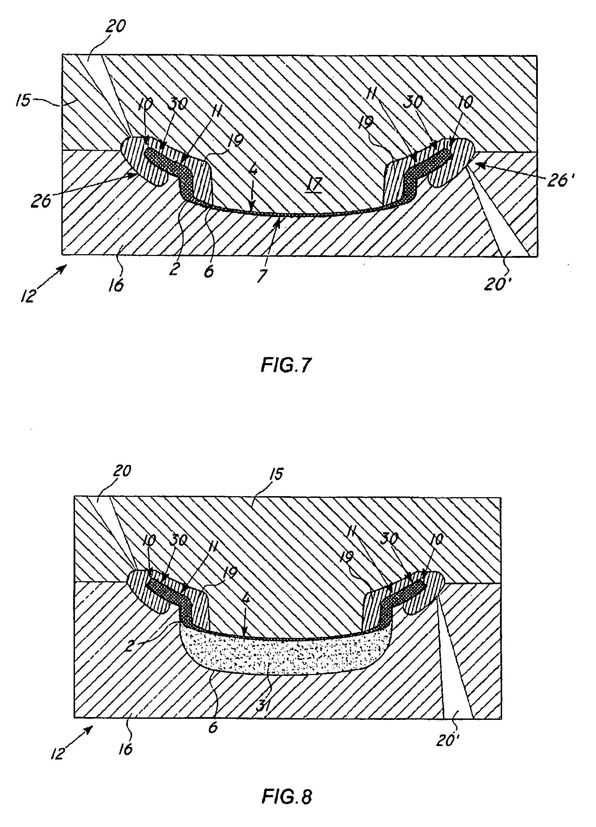

In an alternative embodiment, as shown in FIG. 8, the edge portion 10 of the cover 6 may also extend over the edge portion 11 of the bottom face 4 of the frame 2.

The filling material may be introduced into the peripheral cavity 14 to cover the entire edge portion 10 of the cover 6 and will preferably extend beyond the latter for more effective coupling between the cover 6 and the frame 2.

The mold 12 may be configured with an inner cavity 13 having a widened rear part 22 and an elongate front part 23 along a substantially central first axis of symmetry X.

Furthermore, the peripheral chamber 14 may have a substantially annular extension all along the periphery of the inner cavity 13 to define a pair of side portions 24, 24' and a pair of front 25 and rear 25' axial end portions, communicating with the front portion 23 and the rear portion 22 respectively of the inner cavity 13.

Thus, the outer peripheral rim 19 will be composed of a pair of side sections 26, 26' and a pair of end sections 27, 27'.

In a preferred, non exclusive embodiment of the present invention, the annular peripheral cavity 14 may have a discontinuous outer profile to define side portions 24, 24' separate from their respective axial end portions 25, 25' to provide an outer peripheral rim 19 having side sections 26, 26' separate from one or both axial end sections 27, 27'.

For this purpose, one or more partitions, not shown, may be provided in the peripheral cavity 14, for the end portions 25, 25' to be isolated from the side portions 24, 24'.

Such embodiment will be particularly useful for making a support 1 of the invention from a semifinished assembly 2 having a frame with differently deformable portions, such as the one described in the International Application WO 2004/031025 or in the Italian Application VI2004A000254.

In this case, care should be taken to prevent the outer peripheral rim 19 from undesirably increasing the rigidity of the differently deformable portions, that may be formed, for instance, at the lateral areas 34, 35 of the frame 2.

In view of such purpose, the injection step f) may include a first step f'₁) in which a first filling material is injected into the side portions 24, 24' of the annular peripheral cavity 14 and a second step f'₂) in which a second filling material is injected into the axial end portions 25, 25' of the annular peripheral cavity 14. The two separate injection steps f'₁) and f'₂) may be carried out preferably, but without limitation, in a substantially simultaneous and/or synchronized manner.

Preferably, the first filling material may be selected from the group comprising synthetic and/or natural rubber whereas the second filling material may be selected from the group comprising thermoplastic or thermosetting resins.

For instance, the first filling material may be a natural or synthetic rubber having a Shore A hardness of about 60 Shore A and a higher resilience than the second filling material, which may be a polyamide resin, such as PA6 or PA12, possibly including a filler.

Thus, the support 1 will have a higher flexibility at the side sections 26, 26' of the outer peripheral rim 19, whereas the stiffer end sections 27, 27' will help to increase its overall resistance, for greater safety and strength.

Nonetheless, it shall be intended that the first filling material may be also introduced into one of the side sections 24, 24' only and/or into one or both end portions 25, 25', and the second filling material may be also injected in one of the end portions 25, 25' only and/or in one or both side portions 24, 24' of the peripheral cavity 14, without departure from the scope of the present invention.

Furthermore, the inner cavity 13 may be divided into a larger or smaller number of sections, depending on the desired flexibility and/or strength properties to be imparted to the various parts of the support 1.

A larger number of inner cavities 13 may be also provided, according to the initial shape of the support and to the desired final configuration.

Also, an even greater strength may be imparted to the support by connecting the axial end portions 25, 25' of the annular peripheral chamber 14 by a pair of substantially axial grooves 28, 28'.

Thus, the second filling material may be also injected into the axial channels 28, 28', preferably at the same time as it is introduced f'₂) into the end portions 25, 25' of the peripheral cavity 14, to form a pair of ribs, not shown, for mutual connection of the end sections 27, 27' of the outer peripheral rim 19.

The finished elastic support 1 that may be obtained using the method of the invention and configured as a bicycle saddle, is shown in FIG. 3 and FIG. 4 and in the sectional view of FIG. 5.

The elastic support 1 comprises a frame 2 having a top face 3, a bottom face 4 and an outer peripheral edge 5 all along its outer profile, and a cover 6 having a top side 7 designed to be in contact with a user and a bottom side 8 oriented towards the top face 3 of the frame 2 and an edge portion 10 disposed at least partially on the outer peripheral edge 5 of the frame 2.

The support further comprises an outer peripheral rim 19 which at least partially covers both the top face 3 and the bottom face 4 of the frame 2 with the edge portion 10 of the cover 6 at least partially interposed therebetween.

The edge portion 10 of the cover 6 may be of such a size as to at least partially cover the peripheral edge 2 of the frame 2 at the top face 2 only, as shown in FIG. 5, or to also extend to the bottom face 4, as shown in FIG. 8.

Advantageously, the outer peripheral rim 19 may have a substantially annular shape and an extension substantially coincident with the extension of the outer edge 5 of the frame 2.

The edge portion 10 of the cover 6 may have an end portion 30 glued or mechanically joined to the outer peripheral edge 5 or to an edge portion 11 of the bottom face 4 of the frame 2.

The outer peripheral rim 19 may extend from the top side 7 of the cover 6 to the edge portion 11 of the bottom face 4 of the frame 2, thereby entirely covering the end portion 30 of the cover 6.

The frame 2 may be of rigid or semirigid type, and be made of metal, wood, plastic or even of a thermoplastic or thermosetting composite material, formed of a resin matrix with synthetic or natural reinforcement fibers embedded therein. The cover 6 may be substantially in sheet form, and formed of a natural synthetic or composite material.

Also, as shown in FIG. 8, a pad 31 made of a resilient material, such as polyurethane gel, foam or any other elastomeric material may be interposed between the top face 3 of the frame 2 and the bottom side 8 of the cover 6, for improved user comfort.

Rails, not shown but known per se, may be mounted to the bottom face 4 of the frame 2, for attachment of the elastic support 1 to a bicycle frame.

The frame 2 may also have a widened rear part 32 and an elongate front part 33 along a second axis of symmetry Y, with the front 27 and rear 27' end sections of the outer peripheral rim 19 positioned thereat.

The side sections 26, 26' of the latter may in turn be situated at the side areas 34, 35 connecting the front 33 and rear 32 parts of the frame 2.

The above description clearly shows that the invention fulfils the intended objects and particularly meets the requirement of providing a method of making elastic human body supports that is particularly inexpensive and provides supports that ensure high resistance to operation stresses, even after extensive use.

The method and support of the invention are susceptible to a number of changes or variants, within the inventive concept disclosed in the annexed claims. All the details thereof may be replaced by other technically equivalent parts, and the materials may vary depending on different needs, without departure from the scope of the invention.

While the method and support have been described with particular reference to the accompanying figures, the numerals referred to in the disclosure and claims are only used for the sake of a better intelligibility of the invention and shall not be intended to limit the claimed scope in any manner.

## Claims

1. A method of making an elastic human body support, particularly a saddle for a cycle or motor cycle, comprising the steps of:
a) providing a frame (2) having a top face (3), a bottom face (4) and an outer peripheral edge (5) along its entire outer profile;
b) providing a cover (6) having a top side (7) designed to contact a user and a bottom side (8) oriented towards the top face (3) of said frame (2);
c) coupling said cover (6) to said frame (2) so that its bottom side (8) faces towards the top face (4) of said frame (2) and at least partially covers said outer peripheral edge (5) to define a semifinished assembly (9);
d) providing an openable mold (12) having at least one inner cavity (13) whose shape substantially conforms to said semifinished assembly (9), and at least one peripheral cavity (14);
e) opening said mold (12) and introducing said semifinished assembly (9) into said at least one inner cavity (13) so that said outer edge (5) of said frame (2) at least partly covered by said cover (6) is held in said annular peripheral cavity (14); **characterized by** comprising the step
f) forming an outer peripheral rim (19) by introducing and curing at least one filling material in said peripheral cavity (14);
wherein said peripheral cavity (14) is substantially U shaped so that said outer peripheral rim (19) at least partially encloses both the top face (4) and the bottom face (3) of said frame (2) with said cover (6) at least partially interposed therebetween.

2. Method as claimed in claim 1, wherein said filling material is selected from the group comprising thermoplastic and thermosetting resins in fluid, semifluid or semisolid form, said step of forming (f) said outer peripheral rim (19) including a step (f') of injection of said resin into said peripheral cavity (14) and a later step (f') of curing thereof.

3. Method as claimed in claim 1, wherein said forming step (f) includes a step (f) in which said polymeric material is introduced and pressed into the peripheral cavity (14) and a later step (f") in which such material is hardened.

4. Method as claimed in one or more of the preceding claims, wherein said cover (6) has an edge portion (10) at least partially extending over said peripheral edge (5) of said frame (2) and wherein said filling material is Introduced into said peripheral cavity (14) to entirely cover said edge portion (10) of said cover (6).

5. Method as claimed in one or more of the preceding claims, wherein said at least one inner cavity (13) has a widened rear part (22) and an elongate front part (23) along a first axis of symmetry (X), said peripheral chamber (14) having a substantially annular extension all along the periphery of said inner cavity (13) to define a pair of side portions (24, 24') on opposite sides of said first axis of symmetry (X) and a pair of axial end portions (25, 25'), for forming a pair of side sections (26, 26') and a pair of end sections (27, 27') of said outer peripheral rim (19).

6. Method as claimed in claim 5, wherein said annular peripheral cavity (14) has a discontinuous outer profile to define side portions (24, 24') separate from their respective axial end portions (25, 25') to provide an outer peripheral rim (19) having said side sections (26, 26') separate from said end sections (27, 27').

7. Method as claimed in claim 5 or 6, wherein said injection step (f) includes a first injection step (f1) in which a first filling material is injected into said side portions (24, 24') of said annular peripheral cavity (14) and a second injection step (f2) in which a second filling material is injected into said axial end portions (25, 25') of said annular peripheral cavity (14).

8. Method as claimed in claim 7, wherein said first filling material is selected from the group comprising synthetic and/or natural rubber and said second filling material is selected from the group comprising thermoplastic or thermosetting resins.

9. Method as claimed in claim 7 or 8, wherein said first (f 1) and said second (f2) injection steps are substantially simultaneous or synchronized.

10. Method as claimed in claim 9, wherein said axial end portions (25, 25') of said annular peripheral chamber (14) are connected together by at least one pair of substantially axial channels (28, 28'), said second filling material being also injected into said channels (28, 28') to form at least one pair of ribs for mutual connection of said end sections (27, 27') of said outer peripheral rim (19).

11. An elastic human body support, such as a bicycle saddle, comprising:
- a frame (2) having a top face (3), a bottom face (4) and an outer peripheral edge (5) along its entire outer profile;
- a cover (6) having a top side (7) designed to contact a users body and a bottom side (8) oriented towards the top face (3) of said frame (2) and an edge portion (10) at least partially extending over said outer peripheral edge (5) of said frame (2);
and comprising at least one outer peripheral rim (19) which at least partially encloses both the top face (3) and the bottom face (4) of said frame (2) with said edge portion (10) of said cover (6) at least partially interposed therebetween, **characterized by** said outer peripheral rim (19) having a substantially annular shape and an extension substantially coincident with the extension of said outer peripheral edge (5) of said frame (2).

12. Elastic support as claimed in claim 11, **characterized in that** said edge portion (10) of said cover (6) has an end portion (30) attached to an edge portion (11) of said bottom face (4) of said frame (2), said outer peripheral rim (19) extending from said top face (3) of said cover (6) to said edge portion (11) of said bottom face (4) of said frame (2) to entirely cover said edge portion (10) of said cover (6).

13. Elastic support as claimed in claim 11 or 12, **characterized in that** said frame (2) has a widened rear part (32) and an elongate front part (33) along a second axis of symmetry (Y), said outer peripheral rim (19) comprising a pair of side sections (26, 26') disposed at the connection portions (34, 35) between said front (33) and rear (32) parts and front (27) and rear (27') end sections disposed at said front (33) and rear (32) parts of said frame (2) respectively.

14. Elastic support as claimed in claim 13, **characterized in that** said side sections (26, 26') are separated from said front (27) and rear (27') sections, said side sections (26, 26') being made of a first base material of a predetermined resilience and said front (27) and rear (27') sections being made of a second material having a lower resilience than said first material.

15. Elastic support as claimed in claim 14, **characterized in that** said first base material is selected from the group comprising synthetic and/or natural rubber

16. Elastic support as claimed in claim 14, **characterized in that** said second material is selected from the group comprising thermoplastic or thermosetting resins.

17. Elastic support as claimed in claim 11 to 16, **characterized in that** it comprises a pad (31) interposed between said cover (6) and said frame (2).

## Patentansprüche

1. Verfahren zum Herstellen einer elastischen Unterlage für den menschlichen Körper, insbesondere eines Sattels für ein Fahrrad oder ein Motorrad, umfassend die Schritte:
a) Bereitstellen eines Gestells (2) mit einer Oberseite (3), einer Unterseite (4) und einem äußeren, umlaufenden Rand (5) entlang seines gesamten äußeren Profils;
b) Bereitstellen einer Abdeckung (6) mit einer Oberseite (7), die für den Kontakt mit dem Benutzer bestimmt ist, und einer Unterseite (8), die der Oberseite (3) des Gestells (2) zugewandt ist;
c) Verbinden der Abdeckung (6) mit dem Gestell (2), so dass deren Unterseite (8) der Oberseite (4) des Gestells (2) zugewandt ist und den äußeren, umlaufenden Rand (5) mindestens teilweise bedeckt, um eine Halbfabrikatgruppe (9) zu bilden;
d) Bereitstellen einer zu öffnenden Form (12) mit mindestens einem inneren Hohlraum (13), dessen Form im Wesentlichen der Form der Halbfabrikatgruppe (9) entspricht, und mindestens einem umlaufenden Hohlraum (14);
e) Öffnen der Form (12) und Einlegen der Halbfabrikatgruppe (9) in mindestens einen inneren Hohlraum (13), so dass der äußere Rand (5) des Gestells (2), das zumindest teilweise durch die Abdeckung (6) bedeckt wird, in dem ringförmigen, umlaufenden Hohlraum (14) gehalten wird; **dadurch gekennzeichnet, dass** es den Schritt umfasst;
f) Bilden eines äußeren, umlaufenden Wulstes (19) durch Einfüllen und Aushärten mindestens eines Füllungsmaterials in dem umlaufenden Hohlraum (14);
wobei der umlaufende Hohlraum (14) im Wesentlichen U-förmig ist, so dass der äußere, umlaufende Wulst (19) mindestens teilweise sowohl die Oberseite (4), als auch die Unterseite (3) des Gestells (2) einschließt, und die Abdeckung (6) mindestens teilweise dazwischen eingefügt ist.

2. Verfahren nach Anspruch 1, wobei das Füllungsmaterial aus der Gruppe gewählt ist, die thermoplastische und wärmehärtende Harze in flüssiger, halbflüssiger oder halbfester Form umfasst, wobei der Schritt des Formens (f) des äußeren, umlaufenden Wulstes (19) einen Schritt (f') des Einspritzens des Harzes in den umlaufenden Hohlraum (14) und einen späteren Schritt (1") des Aushärtens desselben umfasst.

3. Verfahren nach Anspruch 1, wobei der Schritt des Formens (f) einen Schritt (f) umfasst, in dem das Polymermaterial in den umlaufenden Hohlraum (14) eingefüllt und gepresst wird, und einen späteren Schritt (f'), in dem das Material ausgehärtet wird.

4. Verfahren nach einem oder mehreren der vorstehenden Ansprüche, wobei die Abdeckung (6) einen Randanteil (10) besitzt, der sich mindestens teilweise über den umlaufenden Rand (5) des Gestells (2) erstreckt und wobei das Füllungsmaterial in den umlaufenden Hohlraum (14) eingefüllt wird, um den Randanteil (10) der Abdeckung (6) vollständig zu bedecken.

5. Verfahren nach einem oder mehreren der vorstehenden Ansprüche, wobei mindestens ein innerer Hohlraum (13) ein erweitertes Hinterteil (22) und ein verlängertes Vorderteil (23) entlang einer ersten Symmetrieachse (X) aufweist, wobei die umlaufende Kammer (14) eine im Wesentlichen ringförmige Ausdehnung entlang der Außenseite des inneren Hohlraums (13) aufweist, um ein Paar Seitenanteile (24, 24') auf den gegenüberliegenden Seiten der ersten Symmetrieachse (X) zu definieren, sowie ein Paar axiale Endanteile (25, 25'), um ein Paar Seitenabschnitte (26, 26') und ein Paar Endabschnitte (27, 27') des äußeren, umlaufenden Wulstes (19) zu bilden.

6. Verfahren nach Anspruch 5, wobei der ringförmige umlaufende Hohlraum (14) ein unterbrochenes äußeres Profil aufweist, um Seitenanteile (24, 24') getrennt von ihren jeweiligen axialen Endanteilen (25, 25') zu definieren, um einen äußeren, umlaufenden Wulst (19) bereitzustellen, dessen Seitenabschnitte (26, 26') von den Endabschnitten (27, 27') getrennt sind.

7. Verfahren nach Anspruch 5 oder 6, wobei der Schritt des Einspritzens (f) einen ersten Einspritzschritt (f 1) umfasst, bei dem ein erstes Füllungsmaterial in die Seitenanteile (24, 24') oder in den ringförmigen, umlaufenden Hohlraum (14) gespritzt wird, und einen zweiten Einspritzschritt (f2), bei dem ein zweites Füllungsmaterial in die axialen Endanteile (25, 25') des ringförmigen umlaufenden Hohlraums (14) eingespritzt wird.

8. Verfahren nach Anspruch 7, wobei das erste Füllungsmaterial aus der Gruppe gewählt wird, die Synthese- und/oder Naturkautschuk umfasst, und das zweite Füllungsmaterial aus der Gruppe, die thermoplastische oder wärmehärtende Harze umfasst.

9. Verfahren nach Anspruch 7 oder 8, wobei der erste (f 1) und der zweite Einspritzschritt (f2) im Wesentlichen gleichzeitig oder synchronisiert erfolgen.

10. Verfahren nach Anspruch 9, wobei die axialen Endanteile (25, 25') der ringförmigen, umlaufenden Kammer (14) durch mindestens ein Paar im Wesentlichen axiale Kanäle (28, 28') miteinander verbunden sind, wobei das zweite Füllungsmaterial ebenfalls in die Kanäle (28, 28') eingespritzt wird, um mindestens ein Paar Rippen für die gegenseitige Verbindung der Endabschnitte (27, 27') des äußeren, umlaufenden Wulstes zu bilden.

11. Elastische Unterlage für den menschlichen Körper, wie beispielsweise ein Fahrradsattel, umfassend:
- ein Gestell (2) mit einer Oberseite (3), einer Unterseite (4) und einem umlaufenden , äußeren Rand (5) entlang seines gesamten äußeren Profils;
- eine Abdeckung (6) mit einer Oberseite (7), die für den Kontakt mit dem Körper des Benutzers bestimmt ist, und eine Unterseite (8), die der Oberseite (3) des Gestells (2) zugewandt ist, und einen Randanteil (10), der sich mindestens teilweise über den äußeren, umlaufenden Rand (5) des Gestells (2) erstreckt; und umfassend
mindestens einen äußeren, umlaufenden Wulst (19), der mindestens teilweise sowohl die Oberseite (3) als auch die Unterseite (4) des Gestells (2) einschließt, wobei der Randanteil (10) der Abdeckung (6) mindestens teilweise dazwischen eingefügt ist, **dadurch gekennzeichnet, dass** der äußere, umlaufende Wulst (19) eine im Wesentlichen ringförmige Form und eine Ausdehnung aufweist, die im Wesentlichen mit der Ausdehnung des äußeren, umlaufenden Randes (5) des Gestells (2) übereinstimmt.

12. Elastische Unterlage nach Anspruch 11, **dadurch gekennzeichnet, dass** der Randanteil (10) der Abdeckung (6) einen Endanteil (30) aufweist, der an einem Randanteil (11) der Unterseite (4) des Gestells (2) befestigt ist, wobei der äußere, umlaufende Wulst (19) sich von der Oberseite (3) der Abdeckung (6) zum Randanteil (11) der Unterseite (4) des Gestells (2) erstreckt, um den Randanteil (10) der Abdeckung (6) vollständig zu bedecken.

13. Elastische Unterlage nach Anspruch 11 oder 12, **dadurch gekennzeichnet, dass** das Gestell (2) ein erweitertes Hinterteil (32) und ein verlängertes Vorderteil (33) entlang einer zweiten Symmetrieachse (Y) aufweist, wobei der äußere, umlaufende Wulst (19) ein Paar Seitenabschnitte (26, 26') umfasst, die an den Verbindungsanteilen (34, 35) zwischen dem Vorder- (33) und dem Hinterteil (32) angeordnet sind, sowie Vorder- (27) und Hinterendabschnitte (27'), die jeweils an den Vorder- (33) und Hinterteilen (32) des Gestells (2) angeordnet sind.

14. Elastische Unterlage nach Anspruch 13, **dadurch gekennzeichnet, dass** die Seitenabschnitte (26, 26') von den Vorder- (27) und Hinterabschnitten (27') getrennt sind, wobei die Seitenabschnitte (26, 26') aus einem ersten Basismaterial mit vorgegebener Kerbschlagfestigkeit, die Vorder- (27) und Hinterabschnitte (27') hingegen aus einem zweiten Material mit geringerer Kerbschlagfestigkeit als das erste Material hergestellt sind.

15. Elastische Unterlage nach Anspruch 14, **dadurch gekennzeichnet, dass** das erste Basismaterial aus der Gruppe gewählt ist, die Synthese- oder Naturkautschuk umfasst.

16. Elastische Unterlage nach Anspruch 14, **dadurch gekennzeichnet, dass** das zweite Basismaterial aus der Gruppe gewählt ist, die thermoplastische oder wärmehärtende Harze umfasst.

17. Elastische Unterlage nach den Ansprüchen 11 bis 16, **dadurch gekennzeichnet, dass** sie ein Polster (31) umfasst, das zwischen die Abdeckung (6) und das Gestell (2) eingefügt ist.

## Revendications

1. Procédé de fabrication d'un support élastique du corps humain, en particulier une selle pour un cycle ou motocycle, comprenant les étapes consistant à :
a) prédisposer un châssis (2) ayant une face supérieure (3), une face inférieure (4) et un bord périphérique extérieur (5) le long de tout son profil extérieur ;
b) prédisposer une couverture (6) ayant un côté supérieur (7) conçu pour être en contact avec un utilisateur et un côté inférieur (8) orienté vers la face supérieure (3) dudit châssis (2) ;
c) accoupler ladite couverture (6) audit châssis (2) de manière que son côté inférieur (8) soit orienté vers la face supérieure (4) dudit châssis (2) et recouvre au moins partiellement ledit bord périphérique extérieur (5) pour définir un ensemble semi-fini (9);
d) prédisposer un moule ouvrable (12) ayant au moins une cavité intérieure (13) dont la forme s'adapte sensiblement audit ensemble semi-fini (9), et au moins une cavité périphérique (14) ;
e) ouvrir ledit moule (12) et introduire ledit ensemble semi-fini (9) dans ladite au moins une cavité intérieure (13) de manière que ledit bord extérieur (5) dudit châssis (2) recouvert au moins en partie par ladite couverture (6) soit maintenu dans ladite cavité périphérique annulaire (14); **caractérisé en ce qu'**il comprend l'étape consistant à :
f) former un rebord périphérique extérieur (19) en introduisant et cuisant au moins une matière de remplissage dans ladite cavité périphérique (14) ;
dans lequel ladite cavité périphérique (14) est sensiblement en forme de U de manière que ledit rebord périphérique extérieur (19) renferme au moins partiellement la face supérieure (4) et la face inférieure (3) dudit châssis (2) avec ladite couverture (6) interposée au moins partiellement entre elles.

2. Procédé selon la revendication 1, dans lequel ladite matière de remplissage est sélectionnée parmi le groupe comprenant des résines thermoplastiques et thermodurcissables sous forme fluide, semi-fluide ou semi-solide, ladite étape de formation (f) dudit rebord périphérique extérieur (19) comprenant une étape (f') d'injection de ladite résine dans ladite cavité périphérique (14) et une étape successive (1") de cuisson de celle-ci.

3. Procédé selon la revendication 1, dans lequel ladite étape de formation (f) comprend une étape (f) dans laquelle ladite matière polymère est introduite et pressée dans la cavité périphérique (14) et une étape successive (f') dans laquelle cette matière est durcie.

4. Procédé selon une ou plusieurs des revendications précédentes, dans lequel ladite couverture (6) a une portion de bord (10) s'étendant au moins partiellement sur ledit bord périphérique (5) dudit châssis (2) et dans lequel ladite matière de remplissage est introduite dans ladite cavité périphérique (14) pour couvrir complètement ladite portion de bord (10) de ladite couverture (6).

5. Procédé selon une ou plusieurs des revendications précédentes, dans lequel ladite au moins une cavité intérieure (13) a une partie arrière élargie (22) et une partie avant allongée (23) suivant un premier axe de symétrie (X), ladite chambre périphérique (14) ayant une extension sensiblement annulaire tout le long de la périphérie de ladite cavité intérieure (13) pour définir une paire de portions latérales (24, 24') sur des côtés opposés dudit premier axe de symétrie (X) et une paire de portions terminales axiales (25, 25'), pour former une paire de sections latérales (26, 26') et une paire de sections terminales (27, 27') dudit rebord périphérique extérieur (19).

6. Procédé selon la revendication 5, dans lequel ladite cavité périphérique annulaire (14) a un profil extérieur discontinu pour définir des portions latérales (24, 24') séparées de leurs portions terminales axiales respectives (25, 25') pour fournir un rebord périphérique extérieur (19) ayant lesdites sections latérales (26, 26') séparées desdites sections terminales (27, 27').

7. Procédé selon la revendication 5 or 6, dans lequel ladite étape d'injection (f) comprend une première étape d'injection (f 1) dans laquelle une première matière de remplissage est injectée dans lesdites portions latérales (24, 24') ou dans ladite cavité périphérique annulaire (14) et une deuxième étape d'injection (f2) dans laquelle une deuxième matière de remplissage est injectée dans lesdites portions terminales axiales (25, 25') de ladite cavité périphérique annulaire (14).

8. Procédé selon la revendication 7, dans lequel ladite première matière de remplissage est sélectionnée dans le groupe comprenant du caoutchouc naturel et/ou synthétique et ladite deuxième matière de remplissage est sélectionnée parmi le groupe comprenant des résines thermoplastiques ou thermodurcissables.

9. Procédé selon la revendication 7 or 8, dans lequel ladite première (f1) et ladite deuxième (f2) étapes d'injection sont sensiblement simultanées et synchronisées.

10. Procédé selon la revendication 9, dans lequel lesdites portions terminales axiales (25, 25') de ladite chambre périphérique annulaire (14) sont reliées entre elles par au moins une paire de canaux sensiblement axiaux (28, 28'), ladite deuxième matière de remplissage étant également injectée dans lesdits canaux (28, 28') pour former au moins une paire de nervures pour la connexion réciproque desdites sections terminales (27, 27') dudit rebord périphérique extérieur (19).

11. Support élastique du corps humain, tel qu'une selle de bicyclette, comprenant :
- un châssis (2) ayant une face supérieure (3), une face inférieure (4) et un bord périphérique extérieur (5) le long de tout son profil extérieur ;
- une couverture (6) ayant un côté supérieur (7) conçu pour être en contact avec un corps d'utilisateurs et un côté inférieur (8) orienté vers la face supérieure (3) dudit châssis (2) et une portion de bord (10) s'étendant au moins partiellement sur ledit bord périphérique extérieur (5) dudit châssis (2);
et comprenant au moins un rebord périphérique extérieur (19) qui renferme au moins partiellement à la fois la face supérieure (3) et la face inférieure (4) dudit châssis (2) avec ladite portion de bord (10) de ladite couverture (6) interposée au moins partiellement entre elles, **caractérisé en ce que** ledit rebord périphérique extérieur (19) a une forme sensiblement annulaire et une extension coïncidant sensiblement avec l'extension dudit bord périphérique extérieur (5) dudit châssis (2).

12. Support élastique selon la revendication 11, **caractérisé en ce que** ladite portion de bord (10) de ladite couverture (6) a une portion terminale (30) fixée à une portion de bord (11) de ladite face inférieure (4) dudit châssis (2), ledit rebord périphérique extérieur (19) s'étendant de ladite face supérieure (3) de ladite couverture (6) à ladite portion de bord (11) de ladite face inférieure (4) dudit châssis (2) pour recouvrir complètement ladite portion de bord (10) de ladite couverture (6).

13. Support élastique selon la revendication 11 or 12 **caractérisé en ce que** ledit châssis (2) a une partie arrière élargie (32) et une partie avant allongée (33) suivant un deuxième axe de symétrie (Y), ledit rebord périphérique extérieur (19) comprenant une paire de sections latérales (26, 26') situées au niveau des portions de connexion (34, 35) entre lesdites parties avant (33) et arrière (32) et des sections terminales avant (27) et arrière (27') situées au niveau desdites parties avant (33) et arrière (32) dudit châssis (2), respectivement.

14. Support élastique selon la revendication 13, **caractérisé en ce que** lesdites sections latérales (26, 26') sont séparées desdites sections avant (27) et arrière (27'), lesdites sections latérales (26, 26') étant constituées d'une première matière de base d'une élasticité prédéterminée et lesdites sections avant (27) et arrière (27') étant constituées d'une deuxième matière ayant une élasticité inférieure à ladite première matière.

15. Support élastique selon la revendication 14, **caractérisé en ce que** ladite première matière de base est sélectionnée parmi le groupe comprenant du caoutchouc naturel et/ou synthétique.

16. Support élastique selon la revendication 14, **caractérisé en ce que** ladite deuxième matière est sélectionnée parmi le groupe comprenant des résines thermoplastiques ou thermodurcissables.

17. Support élastique selon les revendications de 11 à 16, **caractérisé en ce qu'**il comprend un coussinet (31) interposé entre ladite couverture (6) et ledit châssis (2).
